(19) **Europäisches Patentamt**

**European Patent Office**

**Office européen des brevets**

(11) Veröffentlichungsnummer : **0 281 955 B1**

(12) # EUROPÄISCHE PATENTSCHRIFT

(45) Veröffentlichungstag der Patentschrift :
**15.05.91 Patentblatt 91/20**

(51) Int. Cl.⁵ : **B65G 1/04**

(21) Anmeldenummer : **88103329.4**

(22) Anmeldetag : **04.03.88**

(54) **Langmateriallagereinrichtung.**

(30) Priorität : **10.03.87 DE 3707655**

(43) Veröffentlichungstag der Anmeldung :
**14.09.88 Patentblatt 88/37**

(45) Bekanntmachung des Hinweises auf die
Patenterteilung :
**15.05.91 Patentblatt 91/20**

(84) Benannte Vertragsstaaten :
**AT BE CH DE ES FR GB GR IT LI NL SE**

(56) Entgegenhaltungen :
**EP-A- 0 195 844**

(56) Entgegenhaltungen :
**EP-A- 0 213 070**
**DE-A- 2 304 140**
**DE-A- 2 832 396**
**DE-C- 3 012 826**

(73) Patentinhaber : **Dornieden, Heinz**
**Deipe Stegge 225**
**W-4420 Coesfeld (DE)**

(72) Erfinder : **Dornieden, Heinz**
**Deipe Stegge 225**
**W-4420 Coesfeld (DE)**

(74) Vertreter : **Habbel, Hans-Georg, Dipl.-Ing.**
**Postfach 3429 Am Kanonengraben 11**
**W-4400 Münster (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Langmateriallagereinrichtung für Materialboxen gemäß dem Oberbegriff des Hauptanspruches.

Eine gattungsbildende Langmateriallagereinrichtung ist in der DE-OS 30 12 826 beschrieben. Bei dieser bekannten Anordnung können in den einzelnen Materialboxen Langmaterialteile, wie beispielsweise Stäbe, Rohre od. dgl. untergebracht werden, über den Förderer aus den Kragarmregalen entnommen und abgesenkt und einer Fördereinrichtung übergeben werden, die als Unterflurförderer unter den Regalen verfahrbar ist. Hierdurch können die einzelnen Materialboxen der Verarbeitungsstation, beispielsweise einer Säge od. dgl., zugeführt werden.

In vielen Fertigungs- und Handelsbetrieben tritt immer wieder das Problem auf, daß nicht der ganze Inhalt der Materialbox der Verarbeitungsstation zugeführt werden muß, sondern daß an der Verarbeitungsstation beispielsweise nur ein bestimmter Langstab oder ein bestimmtes Rohr benötigt wird. Hier tritt bei den gattungsbildenden Langmateriallager einrichtungen das Problem auf, daß die für einen solchen Fall erforderliche Hin- und Herförderung der gesamten Materialbox zu zeit- und energieaufwendig ist.

Aus der EP 0 102 972 B1 ist eine Kommissioniervorrichtung für Lagereinrichtungen bekannt, bei welcher im Bereich der Regaleinrichtung eine "Umfüllstation" vorgesehen ist. Die aus den Regalen entnommenen Boxen werden dieser Umfüllstation zugeführt, hier werden die in bestimmter Weise gestalteten einzelnen Lagerteile entnommen und in eine Sammelbox übergeben, wobei mehrere solcher spezieller Profile oder Formteile aus verschiedenen Stapelboxen in die Sammelbox übergeben werden können. Durch diese Anordnung ist es möglich, nunmehr der Verarbeitungsstation nur eine Sammelbox zuzuführen, die verschiedene Profilbauteile enthält, so daß der lange Weg vom Regal zur Verarbeitungsstation nur von einer Box ausgeführt werden muß. Bei dieser bekannten Einrichtung ist aber immer noch das Entnehmen der Materialboxen aus den Regalen notwendig.

Aus der EP 0 129 180 A1 ist eine Vorrichtung zur Zufuhr von Materialstangen zu einer Werkzeugmaschine bekannt. Hier wird im Bereich der Werkzeugmaschinen ein Regal für die verschiedenen zu verarbeitenden Profilteile angeordnet und über eine Hubvorrichtung kann nunmehr aus den verschiedenen Regalebenen jeweils das von der Werkzeugmaschine angeforderte Profilteil entnommen werden. Bei dieser bekannten Vorrichtung handelt es sich nicht um eine Langmateriallagereinrichtung, sondern um ein relativ kleines Speziallager im Bereich einer Werkzeugmaschine.

Der Erfindung liegt die Aufgabe zugrunde, die gattungsbildende Langmateriallagereinrichtung so auszubilden, daß auch bei einem solchen Langmateriallager trotz Lagerung des Langmaterials in Materialboxen nur ein Langmaterialteil der Box entnommen und zur Verarbeitungsstation geführt werden kann, ohne daß dabei die Materialbox aus dem Hochregallager entnommen werden muß.

Diese der Erfindung zugrundeliegende Aufgabe wird durch die Lehre des Hauptanspruches gelöst.

Mit anderen Worten ausgedrückt, schlägt die Erfindung vor, daß von den vielen in einem Materiallager untergebrachten Materialboxen je nach Einsatzfall und nach Anforderung eine oder mehrere der Materialboxen an einer Längsseitenwand offen ist und im Bodenbereich so gestaltet ist, daß der Boden von einer auf der Fördereinrichtung angeordneten Hubvorrichtung durchgriffen werden kann, so daß es möglich ist, den der offenen Längsseitenwand benachbarten Stab od. dgl. zu ergreifen, aus der Materialbox zu entnehmen und ihn nunmehr mit der Fördereinrichtung zur Verarbeitungsstation zu führen.

Hierbei wird vorzugsweise so vorgegangen, daß in entsprechenden Materiallagereinrichtungen jeweils das unterste Kragarmregal frei ist. Der die Materialboxen auf- und abbewegende Förderer kann nunmehr beispielsweise die in einem Regallager im obersten Kragarmregal angeordnete Materialbox ergreifen, absenken und in das unterste Kragarmregal abgeben. Aus dieser Stellung kann sich nunmehr die Fördereinrichtung das gewünschte Langmaterial als Einzelteil entnehmen. Es ist dann möglich, diese Materialbox wie der nach oben zu bringen oder es kann grundsätzlich so vorgegangen werden, daß immer in den untersten Kragarmregalen Materialboxen abgestellt werden, die zur Entnahme von Einzelteilen ausgerüstet sind.

Ein Ausführungsbeispiel der Erfindung wird nachfolgend anhand der Zeichnungen erläutert.

Die Zeichnungen zeigen dabei in

Fig. 1 schematisch und schaubildlich ein Langmateriallager zur Verdeutlichung des grundsätzlichen Gedankens der Erfindung, in

Fig. 2 in größerem Maßstab ebenfalls zur Verdeutlichung des Grundgedankens eine schematische Darstellung eines Langmateriallagers, in

Fig. 3 schaubildlich eine Ausführungsform einer Materialbox zur Entnahme von Langmaterialeinzelteilen, in

Fig. 4 einen Schnitt durch die Materialbox im Bereich eines Kragarmes gemäß Fig. 3, in

Fig. 5 eine abgeänderte Ausführungsform der Lagerungsmöglichkeit für die Langmaterialeinzelteile, in

Fig. 6 eine Schemaanordnung und in

Fig. 7 die Fördereinrichtung mit Hubstempel und der im unteren Kragarmregal angeordneten Materialbox in Seiten- und Frontansicht.

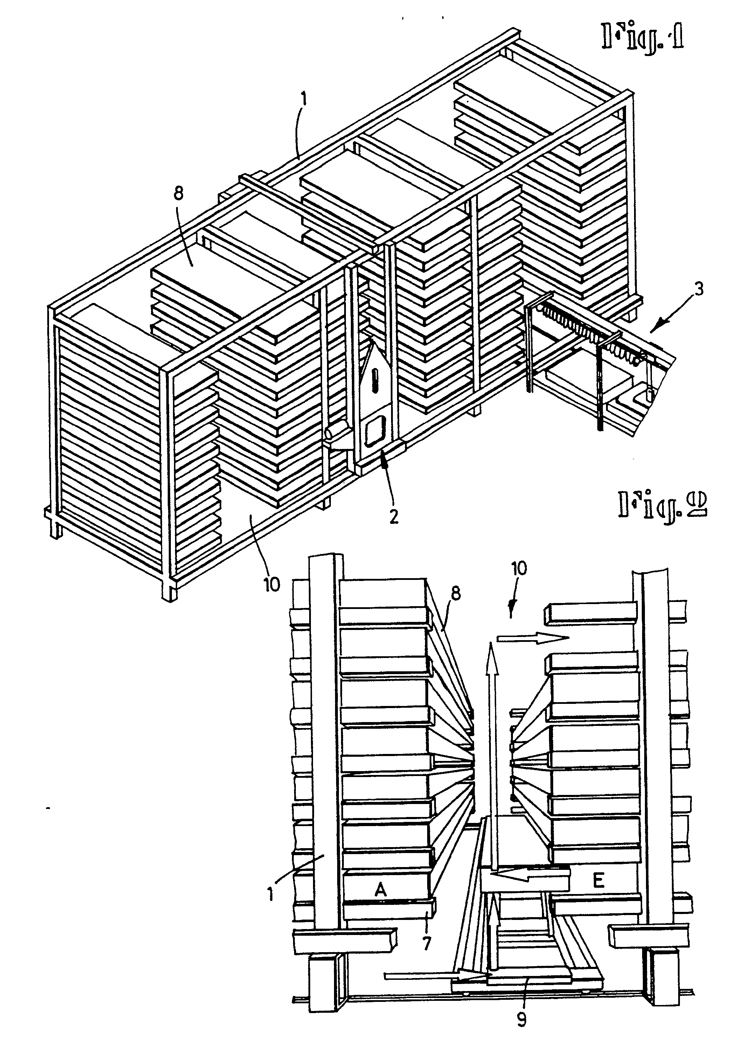

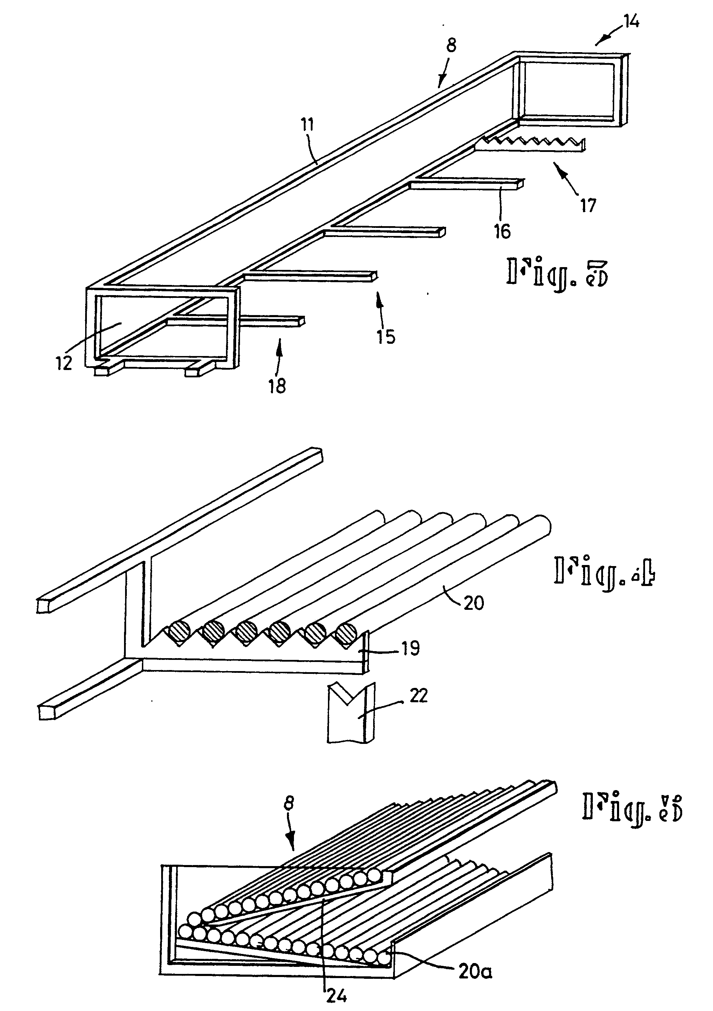

In Fig. 1 und 2 ist mit 1 ein aus einzelnen Rahmenstreben bestehendes Grundgestell bezeichnet, das Kragarmregale 7 schafft, wobei von den Regalen 7 Materialboxen 8 aufgenommen werden. Zwischen den einzelnen Kragarmregalen 7 sind Gassen 10 vorgesehen, durch die die Materialboxen 8 abgesenkt werden können. Vor den Stirnenden der Materialboxen 8 ist auf beiden Seiten des Grundgestells 1 eine Fördervorrichtung 2 vorgesehen, die die Materialboxen 8 stirnseitig untergreifen kann und mit deren Hilfe die Materialboxen 8 in den Gassen auf und ab und quer zu den Gassen in die Regale ein- und ausgelagert werden können.

Unterhalb der Kragarmregale 7 ist eine Fördereinrichtung 9 vorgesehen. Der Förderer 2 kann die von ihm ergriffenen, ausgelagerten und abgesenkten Materialboxen 8 auf diesen Förderer abgeben, wobei die Materialboxen 8 dann zu einer Verarbeitungsstation 3 geführt werden.

Um im Bedarfsfall aus den einzelnen Materialboxen auch einzelne Langmaterialteile entnehmen zu können, sind einzelne der Materialboxen 8 in besonderer Weise ausgebildet.

In Fig. 3 ist eine solche Materialbox dargestellt und besteht aus einer im wesentlichen geschlossenen Seitenwand 11 und den beiden Stirnwänden 12 und 14. Die Bodenwand dieser Materialbox 8, die bei 15 erkennbar ist, ist in besonderer Weise dadurch gestaltet, daß sie aus einzelnen Tragarmen 16 besteht, so daß zwischen diesen Tragarmen 16 Schlitze 17 gebildet werden. Die der Längsseitenwand 11 gegenüberliegende Längsseitenwand ist nicht vorhanden, so daß diese Seite als wandungslose Längsseitenwand 18 bezeichnet wird.

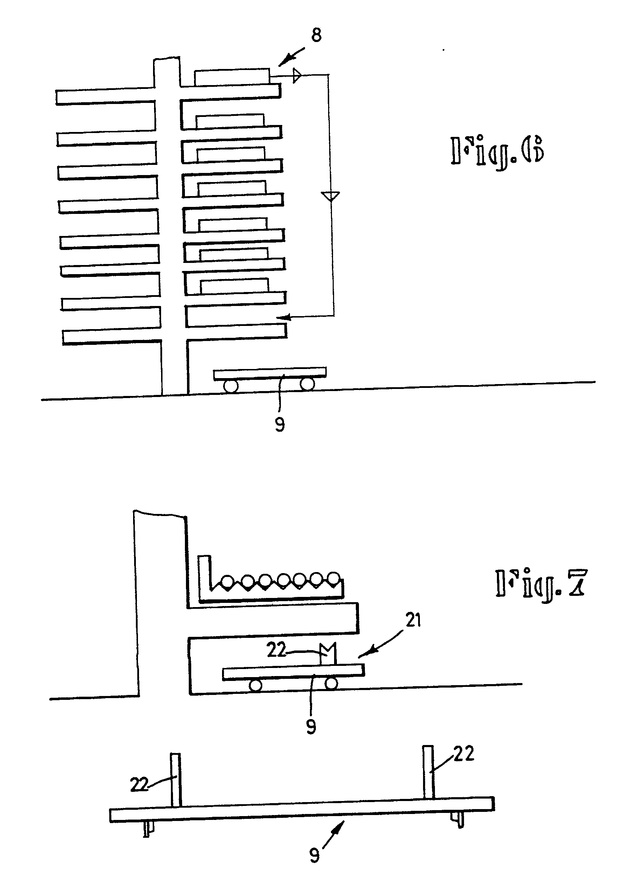

Fig. 4 zeigt, daß die Oberseite der Tragarme 16 mit Rasten 19 so ausgebildet ist, daß die von diesen Tragarmen 16 getragenen Stäbe 20 in den Rasten sicher liegen und gleichzeitig im Abstand voneinander gehalten werden, so daß ein Untergreifen der Stäbe 20 leicht möglich ist.

Fig. 7 zeigt schematisch die besondere Ausbildung der Fördereinrichtung 9, die nämlich mit einer Fördervorrichtung 21 ausgebildet ist, die als Hubstempel 22 gestaltet ist, wobei zwei oder mehrere dieser Hubstempel 22 über die Länge der Fördereinrichtung 9 gesehen vorgesehen werden können. Befindet sich nun – wie dies in Fig. 7 dargestellt ist – die Fördereinrichtung 9 unter einer der in besonderer Weise ausgebildeten Materialboxen 8, können die Hubstempel 22 ausgefahren werden und ergreifen den zur wandungslosen Längsseitenwand 18 hin liegenden vorderen Stab 20, heben ihn aus seinem Rastenlager heraus (Rasten 19), senken ihn ab und dann kann die Fördereinrichtung 9 mit diesem von ihr getragenen Langstab 20 zur Verarbeitungsstation 3 fahren.

Hierbei ist es - wie Fig. 6 zeigt - vorteilhaft, wenn in dem eigentlichen Langmateriallager die untersten Kragarmregale frei sind, so daß von dem Förderer 2 ergriffene Materialboxen in diesem freien Kragarmregal abgestellt werden können, so daß dann die Entnahme durch die Fördereinrichtung 9 möglich ist. Die Entnahme kann aber auch unmittelbar aus der vom Förderer 2 getragenen Materialbox 8 erfolgen.

Bei der in Fig. 5 dargestellten Ausführungsform sollen in einer Materialbox 8 relativ dünne Stäbe gelagert und einzeln entnommen werden. Um nunmehr gegenüber der Darstellung in Fig. 4 die doppelte Menge an Stäben lagern zu können, ist innerhalb der Materialbox 8 eine Schienenlagerung 24 vorgesehen. Die Neigung dieser Schienen ist so, daß die Stäbe aufgrund ihrer Schwerkraft nach unten rollen, so daß jedesmal, wenn an der vorderen Seite ein Langstab 20a entnommen wird, die Stäbe automatisch nachrollen, so lange bis die ganze Materialbox 8 geleert ist.

## Ansprüche

1. Langmateriallagereinrichtung für Materialboxen (8) mit einem Hochregallager aus mehreren, durch Gassen (10) voneinander getrennten, durch eine Fördereinrichtung (9) unterfahrbaren Kragarmregalen (7), einem Förderer (2) mit Auflagekonsolen, die die Materialboxen (8) stirnseitig untergreifen können und mit deren Hilfe die Materialboxen (8) quer zu den Gassen (10) und in diesen gegenüber den Regalen auf- und abbewegbar sind sowie in die Regale (7) ein- und ausgelagert werden können, dadurch gekennzeichnet, daß

a) eine oder mehrere der Materialboxen (8) an ihrer Längsseite wandungslos (bei 18) ausgebildet ist,

b) in der Bodenwand (15) der Materialbox (8) wenigstens zwei quer zur Längserstreckung der Materialbox (8) ausgerichtete und sich zur wandungslosen Längsseite (18) hin öffnende Schlitze (17) vorgesehen sind,

c) die Fördereinrichtung (9) eine in vertikaler Richtung aus- und einfahrbare Fördervorrichtung (21) aufweist, die ein einzelnes Langmaterial (20), z.B. einen Stab, ein Rohr od. dgl. durch den Schlitz (17) hindurch ergreifen und aus der Langmaterialbox (8) entnehmen kann.

2. Langmateriallagereinrichtung nach Anspruch 1, dadurch gekennzeichnet, daß die Bodenwand (15) mit Rasten (19) zur vereinzelten Lagerung des Langmaterials (20) ausgerüstet ist.

3. Langmateriallagereinrichtung nach Anspruch 1, dadurch gekennzeichnet, daß die Langmaterialbox (8) mit einer Schienenlagerung (24) für das Langmaterial (20a) ausgerüstet ist, die eine selbsttätige Förderung des Langmaterials zur wandungslosen Längsseitenwand (18) ermöglicht.

4. Langmateriallagereinrichtung nach einem oder mehreren der vorhergehenden Ansprüche, dadurch gekennzeichnet, daß die eine wandungslose Längsseitenwand (18) aufweisende Materialbox (8) im untersten Kragarmregal (7) gelagert ist.

5. Langmateriallagereinrichtung nach einem oder mehreren der vorhergehenden Ansprüche, dadurch gekennzeichnet, daß die Fördervorrichtung (21) der Fördereinrichtung (9) aus einem Hubaggregat besteht, das über die Länge der Fördereinrichtung (9) gesehen wenigstens zwei Hubstempel (22) aufweist, die an ihrer Oberseite eine Raste für das zu ergreifende Langmaterial (20, 20a) schaffend ausgebildet sind.

6. Langmateriallagereinrichtung nach einem oder mehreren der vorhergehenden Ansprüche 1 bis 5, dadurch gekennzeichnet, daß die Bodenwand der Materialbox (8) durch einzelne Tragarme (16) gebildet ist, wobei wenigstens an zwei voneinander entfernten Tragarmen (16) an der Oberseite Rasten (19) für das Langmaterial (20) vorgesehen sind.

**Claims**

1. An elongate material storage apparatus for material boxes (8) comprising a stacking shelf store consisting of several cantilever type shelves (7) separated from each other by alleys (10) and travellable between by a conveying device (9), a conveyor (2) with support brackets, which can grip under the ends of the material boxes (8) and with the help of which the material boxes (8) can be moved up and down perpendicularly to the alleys (10) and in said alleys with respect to the shelves as well as in and out of the shelves (7), characterized in that

   a) one or more of the material boxes (8) is constructed to be wall-less (at 18) on its longitudinal side,

   b) at least two slits (17) directed perpendicularly to the longitudinal extension of the material box (8) and open towards the wall-less longitudinal side (18) are provided in the base wall (15) of the material box (8),

   c) the conveying apparatus (9) comprises a conveying device (21) which can be extended and retracted in the vertical direction and which can grasp an individual item (20) of elongate material, e.g. a rod, pipe or the like through the slit (17) and remove it from the elongate material box (8).

2. An elongate material storage apparatus according to claim 1, characterized in that the base wall (15) is provided with holding notches (19) for isolated storage of the elongate material (20).

3. An elongate material storage apparatus according to claim 1, characterized in that the elongate material box (8) is provided with a rail storage arrangement (24) for the elongate material (20a), which makes possible automatic conveying of the elongate material to the wall-less longitudinal side wall (18).

4. An elongate material storage apparatus according to one or more of the preceding claims, characterized in that the material box (8) comprising a wall-less longitudinal side wall (18) is accomodated in the lowest cantilever type shelf (7).

5. An elongate material storage apparatus according to one or more of the preceding claims, characterized in that the conveying device (21) of the conveying apparatus (9) consists of a lifting unit which, when viewed over the length of the conveying apparatus (9), comprises at least two lifting props (22), which are constructed at the top to create a holding notch for the elongate material (20, 20a) to be grasped.

6. An elongate material storage apparatus according to one or more of the preceding claims 1 to 5, characterized in that the base wall of the material box (8) is formed of individual carrying arms (16), holding notches (19) for the elongate material (20) being provided on the top of at least two carrying arms (16) remote from each other.

**Revendications**

1. Dispositif d'emmagasinage pour objets longs pour des caisses pour matériel (8) avec un entrepôt à rayonnages en hauteur composé de plusieurs rayonnages à bras en porte-à-faux (7) séparés les uns des autres par des allées (10), sous lesquels peut passer un dispositif de transport (9), un convoyeur (2) avec des consoles d'appui, qui peuvent saisir par endessous les caisses pour matériel (8) et à l'aide desquelles les caisses pour matériel (8) peuvent être déplacées perpendiculairement aux allées (10) et dans celles-ci vers le haut et le bas vis-à-vis des rayonnages ainsi que déposées et retirées des rayonnages (7), caractérisé en ce que :

   a) une ou plusieurs des caisses pour matériel (8) est conçue sans cloison sur sa face latérale (en 18),

   b) dans la paroi du fond (15) de la caisse pour matériel (8) il est prévu au moins deux fentes (17) orientées perpendiculairement à l'extension longitudinale de la caisse pour matériel (8) et s'ouvrant vers la face latérale sans cloison (18),

   c) le dispositif de transport (9) présente un mécanisme de transport (21) pouvant être introduit et extrait dans le sens vertical, qui peut saisir un objet long (20) isolé, par exemple une barre, un tuyau ou similaire à travers la fente (17) et le retirer de la caisse pour matériel (8).

2. Dispositif d'emmagasinage pour objets longs selon la revendication 1, caractérisé en ce que la paroi de fond (15) est pourvue d'encoches (19) pour l'emmagasinage isolé des objets longs (20).

3. Dispositif d'emmagasinage pour objets longs selon la revendication 1, caractérisé en ce que la caisse pour objets longs (8) est pourvue d'un rangement sur rails (24) pour les objets longs (20a), qui permet un transport automatique des objets longs vers la paroi latérale longitudinale sans cloison (18).

4. Dispositif d'emmagasinage pour objets longs selon une ou plusieurs des revendications précédentes, caractérisé en ce que la caisse pour matériel (8) présentant une paroi latérale longitudinale sans cloison (18) est déposée sur le rayonnage à bras en porte-à-faux (7) inférieur.

5. Dispositif d'emmagasinage pour objets longs selon une ou plusieurs des revendications précédentes, caractérisé en ce que le mécanisme de transport (21) du dispositif de transport (9) se compose d'un groupe de levage qui présente, vu sur la longueur du dispositif de transport (9), au moins deux pistons de levage (22), qui sont conçus pour créer sur leur côté supérieur une encoche pour l'objet long (20, 20a) à saisir.

6. Dispositif d'emmagasinage pour objets longs selon une ou plusieurs des revendications 1 à 5 précédentes, caractérisé en ce que la paroi de fond de caisse pour matériel (8) est formée de différents bras en porte-à-faux (16), des encoches (19) pour les objets longs (20) étant prévues sur le côté supérieur d'au moins deux bras en porte-à-faux (16) éloignés l'un de l'autre.

Fig. 1

1

8

3

2

10

Fig. 2

10

8

1

A

E

7

9

Fig. 3

Fig. 4

Fig. 5

8

Fig. 6

Fig. 7